# EUROPÄISCHE PATENTSCHRIFT

(11) **EP 1 868 455 B1**
(45) Veröffentlichungstag und Bekanntmachung des Hinweises auf die Patenterteilung: **04.04.2012**
(21) Anmeldenummer: 06724296.6
(22) Anmeldetag: 12.04.2006
(51) Int. Cl.: A23B 9/00, A23B 9/18, A23L 3/015

(54) **VERFAHREN ZUR BEHANDLUNG VON NATÜRLICHEN AUSGANGSMATERIALIEN MIT HILFE VERDICHTETER GASE**
METHOD FOR PROCESSING NATURAL RAW MATERIALS BY COMPRESSED GASES
PROCEDE POUR TRAITER DES MATIERES PREMIERES NATURELLES AU MOYEN DE GAZ COMPRIMES

(30) Priorität: 15.04.2005 DE 102005017407
(43) Veröffentlichungstag der Anmeldung: 26.12.2007
(73) Patentinhaber: Evonik Degussa GmbH, 45128 Essen (DE)
(72) Erfinder: KAHLEYSS, Ralf, 83368 St. Georgen (DE); MICHLBAUER, Franz, 84558 Kirchweidach (DE); STORK, Kurt, 93326 Abensberg (DE)
(86) Internationale Anmeldenummer: PCT/EP2006/003396
(87) Internationale Veröffentlichungsnummer: WO 2006/108650

(56) Entgegenhaltungen:
- EP-A- 0 979 657
- WO-A-97/25867
- WO-A-99/65342
- WO-A-99/66960
- US-A- 5 290 578
- US-A- 5 520 943
- US-A- 5 547 673
- US-A- 5 667 835
- US-A- 5 869 123
- US-A1- 2004 047 972

## Beschreibung

Gegenstand der vorliegenden Erfindung ist ein Verfahren zur Behandlung von natürlichen, unverdorbenen Ausgangsmaterialien biologischen Ursprungs mit erhöhten Lebendkeimzahlen mit Hilfe verdichteter Gase.

Zur Sterilisation von natürlichen Materialien werden in der Regel Ultrahochdrücke bei Bedingungen ≥ 2000 bar angewendet, wobei vorrangig vegetative Keime sicher abgetötet werden sollen.

Aus dem Stand der Technik sind zahlreiche Verfahrensvarianten bekannt, mit denen dieses Ziel erreicht werden soll.

So ist mit dem europäischen Patent EP 0 480 422 B1 ein Verfahren zur Sterilisierung von Fruchtsaft geschützt, bei dem in einer ersten Stufe zu natürlichem Fruchtsaft, der Pektin und mindestens ein Pektin zersetzendes Enzym enthält, ein protolytisches Enzym zugesetzt wird und anschließend der Fruchtsaft mit einem Druck von mehr als 2000 Atmosphären komprimiert wird. Mit diesem Verfahren soll die Haltbarkeit und Lagerfähigkeit natürlicher Säfte verlängert werden, wobei insbesondere ein Alternatiwerfahren zu den bekannten Sterilisationsverfahren unter Hitzeeinwirkung zur Verfügung gestellt werden sollte. Nachteilig bei diesem Verfahren ist die zwingend erforderliche Zugabe von protolytischen Enzymen zum Fruchtsaft, mit dem die verfahrensbedingten Enzymverluste bspw. in Form von Inaktivierungen aufgewogen werden sollen.

Aus der internationalen Patentanmeldung WO99/65342 A1 ist ein Verfahren zur Stabilisierungsbehandlung von Nahrungsmitteln unter Verwendung von hohen Drücken bekannt, bei dem das jeweilige Nahrungsmittel Drücken von bis zu 3000 bar mit dem Zweck ausgesetzt wird, Enzymaktivitäten im Nahrungsmittel zu reduzieren. Bei diesem Verfahren wird das Nahrungsmittel in festem oder flüssigem Zustand mit einem Kohlendioxidgas gemischt, welches unter Überdruck steht. Im Vordergrund dieser als so genanntes HPP (High Pressure Processing) Verfahrens bekannten Methode, steht die Abtötung von bestimmten Mikroorganismen und die Verbesserung des Geschmacks. Um möglicherweise im Nahrungsmittel enthaltende Luft zu entfernen, wird empfohlen, einen zusätzlichen Behandlungsschritt unter Vakuum durchzuführen.

Ein Verfahren zur Entfernung von Kontaminanten aus bestimmten Substraten wie bspw. Geweben, Cellulose, Gummi, Keramiken aber auch Gläsern ist in WO 00/04 932 A1 beschrieben, wobei insbesondere die Entfernung von Mikroorganismen im Vordergrund steht. Bei diesem Verfahren werden die jeweiligen Ausgangssubstrate mit verdichtetem Kohlendioxid in flüssiger Form versetzt und anschließend wird diese Mischung einer UV-Behandlung unterzogen.

Ein Verfahren zur Desinfektion und Sterilisation von textilen Materialien und Gebrauchsgegenständen im medizinischen und pharmazeutischen Bereich kann der deutschen Offenlegungsschrift DE 100 58 553 A1 entnommen werden. Es wird beschrieben, dass als Fluidgemisch flüssiges unterkritisches Kohlendioxid zusammen mit Moderatoren wie bspw. 2-Propanol, Desinfektions- und Sterilisationsmitteln, kationischen oder nicht ionischen Tensiden und Mischungen daraus verwendet wird. Der Hauptvorteil dieses Verfahrens soll darin bestehen, dass auf Grund der niedrigen Viskosität des eingesetzten Fluids die Entfernung der Verunreinigungen relativ schnell abläuft, wobei insgesamt die Energiebilanz sehr günstig sein soll. Mit diesem Verfahren soll vor allem gegenüber dem Einsatz von überkritischem Kohlendioxid auf Grund der niedrigeren Drücke eine wesentlich kostengünstigere, materialschonendere und sicherere Alternative zur Verfügung stehen.

Zur Desinfektion und Sterilisation von Operationswäsche und Bekleidungsstücken für Operationsräume bzw. Reinräume wurde ein Verfahren entwickelt, welches die beschriebenen Materialien mit einem überkritischen Fluid (vorzugsweise CO₂) behandelt, wodurch die Keimzahl drastisch verringert wird. Dies erfolgt dadurch, dass bei der Expansion des Fluids die Keimzellen platzen und damit abgetötet werden, wie bspw. in DE 39 04 513 A1 beschrieben.

Es wurde auch versucht, durch die Zugabe von Wasser und/oder Tensiden, die Desinfektion zu verbessern. So beschreibt die internationale Patentanmeldung WO99/66960 A1 ein Verfahren, mit dem medizinische Wirkstoffe und Implantate im überkritischen Kohlendioxid desinfiziert und sterilisiert werden können. Dabei diffundiert das Kohlendioxid in die Zellen der Mikroorganismen und verändert dort den pH-Wert. Diese Veränderung soll die Zellen zerplatzen lassen. Hinzu kommt, dass bei diesem Verfahren der Druck kontinuierlich verändert wird, wodurch das Abtöten der Zellen zusätzlich gefördert wird.

In DE 37 44 329 A1 ist offenbart, dass durch den Einsatz überkritischer Gase in Verbindung mit organischen Co-Solventien sterile polymere Carrier erhalten werden können. Bei diesem Verfahren werden verschiedenste organische Lösemittel verwendet, die an dem zu desinfizierenden bzw. sterilisierenden Gut zurückbleiben und deshalb bei Verwendung im offenen Wundbereich zu Hämolysen führen können, was in leicht nachvollziehbarer Weise nachteilig ist.

Aus der europäischen Anmeldung EP 1 002 899 A1 ist schließlich ein Verfahren zur Inaktivierung microbieller Kontaminanten in Papieren bekannt, wobei das zu behandelnde Material Kohlendioxid im überkritischen Zustand ausgesetzt wird. Die Papiere bzw. Bücher werden vor der Beaufschlagung mit überkritischem CO₂ in feuchter Atmosphäre mit einer relativen Luftfeuchtigkeit von mindestens 60% bei 20 bis 40°C vorkonditioniert, um so resistente Schimmelspuren vom inerten Überdauerungszustand in die empfindlichere aktive Wachstumsphase zu überführen. Diese Vorkonditionierung benötigt einen Zeitraum von wenigstens 5 Stunden, wobei allerdings eine Dauer von mehr als 20 Stunden empfohlen wird. Auch soll die Vorkonditionierung bei einem erhöhtem Druck von mindestens 50 bar über 12 Stunden erfolgen.

Aus diesem bekannten Stand der Technik ist kein Verfahren bekannt, mit dem in natürlichen, unverdorbenen Ausgangsmaterialien biologischen Ursprungs, die zusätzlich erhöhte Lebendkeimzahlen aufweisen, mit Hilfe verdichteter Gase die Lebendkeimzahl effektiv gesnkt werden kann. Entweder müssen Enzyme zugesetzt werden oder aber die Verfahren benötigen die Zugabe von Co-Solventien oder zusätzliche Schritte, mit denen die Ausgangsmaterialien vorkonditioniert werden.

Prinzipiell stellt die Resistenz bakterieller Endosporen das Hauptproblem dar, welches aber durch Kombination mindestens zweier Druckintervalle mit zwischengeschalteter Inkubationsphase gelöst werden kann. In der Inkubationsphase findet nämlich die Sporenkeimung statt und die vegetativen Zellen werden in der zweiten nachgestalteten Druckstufe erfasst. Dabei ist die optimale ZeitlTemperaturkombination von der Keimart und dem zu behandelnden Rohstoff abhängig.

Bekannt ist auch, dass die Zusammensetzung der Matrix einen wesentlichen Einfluss auf die Wirksamkeit der druckinduzierten Entkeimung hat. So können bspw. in der Matrix enthaltene Fette, Kohlenhydrate und Proteine eine Schutzwirkung auf die Mikroorganismen ausüben. Eine positive Wirkung auf die Entkeimungseffizienz kann auf der anderen Seite Wasser ausüben. Von Gewürzen ist bspw. bekannt, dass diese nur dann entkeimbar sind, wenn sie angefeuchtet werden.

Zu hohe Keimzahlgehalte können eine natürliche Rohware für deren weitere Verwendung und insbesondere deren Verzehr unbrauchbar machen. Dabei ist es nicht zwingend erforderlich, dass ein mikrobieller Verderbnisvorgang vorliegt, sondern es reicht meistens auch schon die Überschreitung von Richt- oder Grenzwerten aus. In diesem Zusammenhang wird auf die anerkannten Empfehlungen in Form des DGHM oder der EU- bzw. nationaler Regelungen verwiesen.

Aus US 5,520,943 und US 5,667,835 ist ein Verfahren zum Inaktivieren von Mikroorganismen in einem flüssigen Lebensmittel bekannt, bei dem überkritisches CO₂ in das flüssige Lebensmittel durch ein Filter mit einer Maschenweite von maximal 120 µm eingeleitet wird.

Aus EP 0 979 657 A1 ist ein kontinuierliches Verfahren zur Verringerung der mikrobiellen Aktivität in einem flüssigen Produkt bekannt, bei dem unter Druck ein Strom des flüssigen Produkts mit einem Strom von unter Druck verflüssigtem CO₂ gemischt wird und die Mischung durch eine Reaktionszone geleitet wird.

WO 97/25867 beschreibt eine Extraktion von Samen des Neem-Baums mit überkritischem CO₂ um insektizid wirksame Mittel herzustellen. US 5,547,673 beschreibt eine Extraktion von gemahlenen Kürbiskernen um pharmazeutisch wirksame Extrakte herzustellen. Beide Dokumente offenbaren nichts zu einer erhöhten Lebendkeimzahl in den Ausgangsmaterialien.

Aus den bekannten Nachteilen des Standes der Technik hat sich somit die Aufgabe gestellt, ein Verfahren bereitzustellen, mit dem natürliche, unverdorbene Ausgangsmaterialien biologischen Ursprungs und mit erhöhten Lebendkeimzahlen, die Früchte, Samen und Nüsse sind, mit Hilfe verdichteter Gase behandelt werden können. Dabei bestand die Zielsetzung nicht darin, Ausgangsmaterialien, die auf Grund ihres verdorbenen oder Ekel erregenden Zustandes nicht mehr lebensmitteltauglich sind, nachträglich in verwendungsfähige Rohstoffe umzuwandeln und so wieder verkehrsfähig zu machen. Auch sollten nicht vorrangig Doxine, bakterielle Allergene oder abgetötete Keime aus den Ausgangsmaterialien entfernt werden. Vielmehr sollte ein Verfahren bereitgestellt werden, das ohne den zwingenden Zusatz von Co-Solventien oder sonstigen aktiven Komponenten wie bspw. Enzymen, die Reduzierung erhöhter Lebendkeimzahlen auf wirtschaftliche und relativ einfache Weise gewährleistet.

Gelöst wurde diese Aufgabe mit einem entsprechenden Verfahren, bei dem das Ausgangsmaterial bei Drücken ≥ 73 bar und Temperaturen > 60°C in mindestens einem Behandlungszyklus für eine Dauer von 30 Minuten bis 3 Stunden pro Zyklus überkritischem Kohlendioxid ausgesetzt wird.

Überraschenderweise hat es sich gezeigt, dass mit diesem Verfahren nicht nur die Aufgabenstellung vollkommen erfüllt werden konnte, sonder dass darüber hinaus neben dem gewünschten Effekt der Keimzahlreduktion gleichzeitig auch Nebeneffekte erzielt werden, die eventuell erforderliche Nachbehandlungsschritte deutlich vereinfachen. So ist es zum Beispiel möglich, durch Druck- und Temperaturauswahl bestimmte Ausgangsmaterialien wie zum Beispiel fette Öle teilweise zu extrahieren oder durch den gezielten Einsatz von Entspannungszyklen Texturveränderungen in den Ausgangsmaterialien vorzunehmen. Insbesondere derartige Texturveränderungen können bspw. die Vermahlung von Ölsaaten und Nüssen vereinfachen, da die Gewebezellen durch den Entspannungsprozess gecrackt werden und so eine mürbe und leicht zu vermahlende Textur resultiert.

Die bereits angesprochene und ebenfalls überraschende zusätzliche Entfernung von fettem Öl, vor allem aus den oberflächlichen Schichten von Geweben, lässt sich für eine nachträgliche Aufbringung von zum Beispiel Austauschfetten hervorragend nutzen. Die so erhaltenen Fette können bestimmte spezifische Wirkungen entfalten, wie z. B. eine höhere Stabilität gegen Luftsauerstoff (allgemein: oxidative Stabilität), höhere Schmelzpunkte oder aber auch eine erleichterte Zugabe von Geschmacks-, Geruchs- und Farbstoffen.

Überraschenderweise hat sich somit insgesamt herausgestellt, dass mit dem vorgeschlagenen Verfahren neue Anwendungsgebiete, zumindest aber Verbesserungen bestehender Anwendungen zugänglich sind.

Überraschenderweise wurde festgestellt, dass bereits relativ geringe Drücke ausreichend sind, insbesondere Drücke von ≤ 500 bar, um erhöhte Lebendkeimzahlen zu reduzieren. Für das erfindungsgemäße Verfahren wird eine Behandlung des Ausgangsmaterials empfohlen, die bei Drücken zwischen vorzugsweise 150 und 400 bar und besonders bevorzugt zwischen 250 und 350 bar durchgeführt wird. Hinsichtlich der Verfahrenstemperatur unterliegt das beanspruchte Verfahren prinzipiell bei Beachtung der erfindungswesentlichen Untergrenze keinerlei Beschränkungen. Allerdings haben sich aus wirtschaftlicher und verfahrenstechnischer Sicht Temperaturen empfohlen, die zwischen 80 und 200 °C und besonders bevorzugt zwischen 90 und 150 °C liegen.

Die dem beanspruchten Verfahren zu Grunde liegenden Ausgangsmaterialien sind Früchte, Samen und Nüsse. Bevorzugt handelt es sich bei dem Ausgangsmaterial um Nahrungsmittel bzw. Lebensmittel. Früchte, Samen und Nüsse weisen bekanntlich zum Teil dramatische Kontaminationen mit Schimmelpilzen, Schimmelpilzsporen und damit zusammenhängenden Toxinen auf. Selbstverständlich ist es auch möglich, die genannten Ausgangsmaterialien in vorbehandelter Form einzusetzen, wobei für die genannten Früchte, Samen und Nüsse insbesondere die zerkleinerte Form in Frage kommt, um so dem eingesetzten überkritischen Kohlendioxid einen besseren Zugang in Form einer vergrößerten Oberfläche zu verschaffen.

Ein beträchtlicher Vorteil des erfindungsgemäßen Verfahrens liegt darin, dass es ohne jegliche Zusätze durchgeführt werden kann. In einer bevorzugten Ausführungsform wird das erfindungsgemäße Verfahren deshalb ohne den Zusatz von Co-Solventien oder sonstigen aktiven Komponenten, wie z.B. Enzymen, durchgeführt. Allerdings kann es gemäß einer weiteren Ausführungsform empfehlenswert sein, das Verfahren gemäß Erfindung in Gegenwart von Co-Solventien durchzuführen, wobei dann vorzugsweise Wasser oder wässrige Lösungen besonders gut geeignet sind. Insbesondere Wasserstoffperoxid-Lösungen oder wässrige alkoholische Lösungen, wie z. B. wässrige Ethanol-Lösungen, werden besonders empfohlen, da sie zum einen eine oxidative Wirkung und zum anderen eine Tensidwirkung im Hinblick auf die Beeinflussung der Oberflächenmatrix des Ausgangsmaterials bzw. einer Wechselwirkung mit Fetten und Ölen ausüben und so den Zugang des überkritischen Kohlendioxids erleichtern. Falls Co-Solventien eingesetzt werden sollen, empfiehlt die vorliegende Erfindung Mengen von 1,0 bis 10,0 Gew.-% und bevorzugt 2 bis 5 Gew.-%, jeweils bezogen auf die Menge an eingesetztem Ausgangsmaterial.

Es wurde bereits darauf hingewiesen, dass das vorgeschlagene Verfahren besonders dann effektiv durchzuführen ist, wenn es in mehreren Behandlungszyklen durchgeführt wird. Besonders empfohlen wird eine Zyklusanzahl die zwischen 1 und 4 liegt, wobei die Behandlungszyklen vorzugsweise durch mindestens einen Entspannungszyklus bzw. Entspannungsschritt unterbrochen werden können. Durch diese Entspannungsschritte werden die Gewebezellen sowohl der Ausgangsmaterialien, aber auch der Mikroorganismen aufgebrochen, wodurch die Lebendkeimzahl zusätzlich erniedrigt wird. Werden die Gewebezellen der Ausgangsmaterialien durch diese Entspannungsschritte aufgebrochen, kann zusätzlich die Textur gezielt eingestellt werden, da so eine relativ mürbe Produktmasse entsteht, die anschließend leicht vermahlen werden kann.

Die Entspannungsschritte haben vorteilhafterweise eine Dauer von 1 Minute bis 3 Stunden, insbesondere von 5 Minuten bis 1 Stunde, mehr bevorzugt von 10 Minuten bis 30 Minuten. Während des Entspannungsschritts wird der Druck verringert, insbesondere auf ≤ 70 bar, bevorzugt auf ≤ 50 bar, mehr bevorzugt auf ≤ 20 bar, noch mehr bevorzugt auf ≤ 5 bar. Besonders bevorzugt wird das Material im Entspannungsschritt vollkommen druckentlastet, also nur noch dem Atmosphärendruck bzw. Umgebungsdruck ausgesetzt. Während des Entspannungsschritts kann die Temperatur des Durckbehandlungsschritts beibehalten werden. Es ist aber auch möglich, die Temperatur abzusenken, z.B. auf 10 bis 50 °C.

Besonders bevorzugt umfasst das erfindungsgemäße Verfahren nach wenigstens einem Druckbehandlungsschritt wenigstens einen Entspannungsschritt. Noch mehr bevorzugt schließt sich an den Entspannungsschritt wenigstens ein weiterer Druckbehandlungsschritt an. Durch die Kombination von wenigstens zwei Druckintervallen mit wenigstens einem zwischengeschalteten Entspannungsschritt können insbesondere auch schwer einzudämmende Keime, wie z.B. bakterielle Endosporen, wirksam reduziert werden.

Insgesamt empfiehlt die vorliegende Erfindung eine Dauer pro Einzelzyklus, die 1 bis 2 Stunden beträgt.

Das vorgeschlagene Verfahren ist insbesondere dadurch gekennzeichnet, dass Endprodukte erhalten werden, die eine maximale Keimzahl aufweisen, welche den Werten des Europäischen Arzneibuchs in ihrer Ausgabe des Jahres 2001 für pharmazeutische Zubereitungen der Kategorie 3B entsprechen. Auf Grund der vorgeschlagenen Verfahrensvarianten können neben der Lebendkeimzahlreduktion aber auch Toxinwerte und Anteile an mikrobiellen Allergenen oder aber die Gesamtkeimzahl signifikant reduziert werden, wodurch die erhaltenen Produkte eine zusätzliche Qualitätsverbesserung erfahren.

Das eingesetzte Ausgangsmaterial weist eine erhöhte Lebendkeimzahl auf, insbesondere eine Lebendkeimzahl, die größer ist als die Werte des Europäischen Arzneibuches in der Ausgabe des Jahres 2001 für pharmazeutische Zubereitungen der Kategorie 3B, und insbesondere eine Lebendkeimzahl, die mindestens 1 %, z.B. mindestens 5 % oder mindestens 10 %, größer ist. Es ist aber auch möglich, Ausgangsmaterialien zu behandeln, deren Lebendkeimzahl mindestens 50 % oder sogar mindestens 100 % (also um das Doppelte der angegebenen Werte) größer ist. Zu beachten ist dabei, dass das Ausgangsmaterial unverdorben ist, also grundsätzlich noch lebensmitteltauglich ist. Die maximale Lebendkeimzahl ist deshalb vorzugsweise kleiner als das 1000-fache, mehr bevorzugt kleiner als das 100-fache und noch mehr bevorzugt kleiner als das 10-fache und insbesondere kleiner als das 5-fache der Werte des Europäischen Arzneibuches, wie oben angegeben.

Insgesamt wird mit dem erfindungsgemäßen Verfahren eine Methode vorgeschlagen, die auf Grund ihrer relativ unkomplizierten Durchführbarkeit und ausgeprägten Wirtschaftlichkeit eine deutliche Verbesserung des Standes der Technik darstellt.

Die nachfolgenden Beispiele verdeutlichen die Vorteile des vorgeschlagenen Verfahrens.

### Beispiele

### Beispiel 1

500 g eines gemahlenen fetten Samens (Soja) mit einem Fettgehalt von 25 Gew.-% wurden mit 2 Druckzyklen bei jeweils 260 bar und 90 °C bei einer Zyklusdauer von 1,5 Stunden mit reinem überkritischen CO₂ behandelt. Zwischen den beiden Behandlungszyklen wurde zum Zwecke des Zellcrackings voll entspannt.

Die Keimzahlen konnten auf die vom Europäischen Arzneibuch (2001) für pharmazeutische Zubereitung in der Kategorie 3B geforderten Werte reduziert werden.

### Beispiel 2

Die Behandlung wurde gemäß Erfindungsbeispiel 1 durchgeführt, wobei allerdings als Co-Solvens 2,0 Gew.-% einer 3 %igen wässrigen Wasserstoffperoxid-Lösung zugesetzt wurden.

Auch in diesem Fall konnten die Keimzahlen auf die vom Europäischen Arzneibuch (2001) geforderten Werte reduziert werden.

### Beispiel 3

Ganze, ungemahlene Pistazienkerne wurden unter den im Erfindungsbeispiel 1 genannten Bedingungen behandelt. Nach insgesamt zwei Behandlungszyklen waren die Nüsse größtenteils stark zerkleinert und das ursprünglich harte Gewebe befand sich durchgängig in einem mürben Zustand. Mit einem dritten zusätzlichen Zyklus wurde die Zerkleinerung vervollständigt.

Nachdem die zerkleinerten Nüsse aus dem Autoklaven entnommen worden waren, waren sie äußerlich trocken und fettfrei, wobei sich allerdings der absolute Fettgehalt nur um 1,5 % reduziert hatte.

### Beispiel 4

Gemahlene Pistazienkerne mit einem Gesamtaflatoxingehalt > 4 ppb wurden unter Zugabe einer wässrigen Ethanollösung als Co-Solvens unter den Bedingungen des Erfindungsbeispiels 1 extrahiert. Die Menge des zugesetzten Co-Solvens betrug 3,0 Gew.-%, bezogen auf die Menge der eingesetzten Nussmasse.

Der Aflatoxingehalt wurde durch diese Behandlungsmaßnahme unter den gesetzlichen Grenzwert von 4 ppb Gesamtaflatoxin gedrückt.

### Beispiel 5

Ganze Kamillenblüten wurden mit reinem überkritischem CO₂ bei 100 bar und 80°C behandelt. Nach einer Behandlungsdauer von insgesamt 30 Minuten wurde die Probe entnommen und untersucht. Die sensorische Qualität blieb weitgehend erhalten. Der Gehalt an etherischen Ölen nahm unwesentlich um 13 Gew.-% ab. Der Gesamtkeimgehalt reduzierte sich um 2 Zehnerpotenzen, wobei Salmonellen vollständig abgetötet werden konnten.

### Beispiel 6

Ganze Fenchelsamen wurden mit reinem überkritischem CO₂ bei 260 bar und 80°C behandelt. Nach 30 min reduzierte sich der Gesamtkeimgehalt um 1 Zehnerpotenz, nach weiteren 30 Minuten um insgesamt 2 Zehnerpotenzen, also auf ein Hundertstel. Der qualitative Verlust war nach den beiden Druckzyklen nur unbedeutend: So blieb der Feuchtegehalt unverändert und entsprach den Leitsätzen.

## Patentansprüche

1. Verfahren zur Behandlung von natürlichen, unverdorbenen Ausgangsmaterialien biologischen Ursprungs mit erhöhten Lebendkeimzahlen, wobei die Lebendkeimzahl mindestens 10 % größer ist als die Werte des Europäischen Arzneibuches in der Ausgabe des Jahres 2001 für pharmazeutische Zubereitungen der Kategorie 3B und kleiner ist als das 1000-fache der Werte des Europäischen Arzneibuches, mit Hilfe verdichteter Gase, wobei als Ausgangsmaterialien Früchte, Samen und Nüsse eingesetzt werden,
**dadurch gekennzeichnet,**
**dass** das Ausgangsmaterial bei Drücken ≥ 73 bar und Temperaturen
≥ 60 °C in mindestens einem Behandlungszyklus für eine Dauer von 30 Minuten bis 3 Stunden pro Zyklus überkritischem Kohlendioxid ausgesetzt wird.

2. Verfahren nach Anspruch 1,
**dadurch gekennzeichnet,**
**dass** die Behandlung bei Drücken zwischen 150 und 400 bar und besonders bevorzugt zwischen 250 und 300 bar durchgeführt wird.

3. Verfahren nach einem der Ansprüche 1 oder 2,
**dadurch gekennzeichnet,**
**dass** die Behandlung bei Temperaturen zwischen 80 und 200 °C und besonders bevorzugt bei 90 bis 150 °C erfolgt.

4. Verfahren nach einem der Ansprüche 1 bis 3, **dadurch gekennzeichnet, dass** als Ausgangsmaterialien Früchte, Samen und Nüsse in vorbehandelter Form und besonders bevorzugt in zerkleinerter Form, eingesetzt werden.

5. Verfahren nach einem der Ansprüche 1 bis 4, **dadurch gekennzeichnet, dass** es in Gegenwart von Co-Solventien, vorzugsweise von Wasser oder wässrigen Lösungen und besonders bevorzugt von Wasserstoffperoxid-Lösungen oder wässrigen alkoholischen Lösungen, wie z. B. einer wässrigen Ethanollösung, durchgeführt wird.

6. Verfahren nach Anspruch 5, **dadurch gekennzeichnet, dass** der Anteil der Co-Solvens-Komponente 1,0 bis 10,0 Gew.-% und bevorzugt 2 bis 5 Gew.%, jeweils bezogen auf die Menge an eingesetztem Ausgangsmaterial, beträgt.

7. Verfahren nach einem der Ansprüche 1 bis 6, **dadurch gekennzeichnet, dass** es in 1 bis 4 Zyklen durchgeführt wird, wobei die Behandlungszyklen vorzugsweise durch mindestens einen Entspannungszyklus unterbrochen werden.

8. Verfahren nach einem der Ansprüche 1 bis 7, **dadurch gekennzeichnet, dass** die Dauer eines Einzelzyklusses 1 bis 2 Stunden beträgt.

## Claims

1. Method for processing natural, unspoilt starting materials of biological origin with increased living-germ counts, where the living-germ count is at least 10% greater than the values of the European Pharmacopoeia in the 2001 edition for pharmaceutical preparations of category 3B and is less than 1000 times the values of the European Pharmacopoeia, with compressed gases, where the starting materials used are fruits, seeds and nuts,
**characterized in that**
the starting material is subjected to supercritical carbon dioxide at pressures ≤ 73 bar and temperatures ≥ 60°C in at least one processing cycle for a period of 30 minutes to 3 hours per cycle.

2. Method according to Claim 1,
**characterized in that**
the processing is carried out at pressures between 150 and 400 bar and particularly preferably between 250 and 300 bar.

3. Method according to one of Claims 1 or 2,
**characterized in that**
the processing takes place at temperatures between 80 and 200°C and particularly preferably at 90 to 150°C.

4. Method according to any one of Claims 1 to 3, **characterized in that** the starting materials used are fruits, seeds and nuts in pretreated form and particularly preferably in comminuted form.

5. Method according to any one of Claims 1 to 4, **characterized in that** it is carried out in the presence of co-solvents, preferably water or aqueous solutions and particularly preferably hydrogen peroxide solutions or aqueous alcoholic solutions, such as e.g. an aqueous ethanol solution.

6. Method according to Claim 5, **characterized in that** the fraction of the co-solvent component is 1.0 to 10.0% by weight and preferably 2 to 5% by weight, in each case based on the amount of starting material used.

7. Method according to any one of Claims 1 to 6, **characterized in that** it is carried out in 1 to 4 cycles, where the processing cycles are preferably interrupted by at least one decompression cycle.

8. Method according to any one of Claims 1 to 7, **characterized in that** the duration of an individual cycle is 1 to 2 hours.

## Revendications

1. Procédé pour le traitement des produits de départ naturelles d'origine biologique, non avariées, à nombres élevés de germes vivants, le nombre de germes vivants étant supérieur d'au moins 10 % aux valeurs de la Pharmacopée Européenne dans l'édition de l'année 2001 pour des préparations pharmaceutiques de la catégorie 3B et inférieur à 1 000 fois les valeurs de la Pharmacopée Européenne, à l'aide de gaz comprimés, des fruits, des graines et des noix étant utilisés comme produits de départ, **caractérisé en ce qu'**on expose le produit de départ à du dioxyde de carbone supercritique, sous des pressions ≥ 73 bars et à des températures ≥ 60 °C, en au moins un cycle de traitement pendant une durée de 30 minutes à 3 heures par cycle.

2. Procédé selon la revendication 1, **caractérisé en ce que** le traitement est effectué sous des pressions de 150 à 400 bars et de façon particulièrement préférée entre 250 et 300 bars.

3. Procédé selon la revendication 1 ou 2, **caractérisé en ce que** le traitement s'effectue à des températures comprises entre 80 et 200 °C et de façon particulièrement préférée de 90 à 150 °C.

4. Procédé selon l'une quelconque des revendications 1 à 3, **caractérisé en ce qu'**on utilise comme produits de départ des fruits, des graines et des noix sous forme prétraitée et de façon particulièrement préférée sous forme fragmentée.

5. Procédé selon l'une quelconque des revendications 1 à 4, **caractérisé en ce qu'**il est effectué en présence de cosolvants, de préférence d'eau ou de solutions aqueuses et de façon particulièrement préférée de solutions de peroxyde d'hydrogène ou de solutions aqueuses alcooliques, comme par exemple d'une solution aqueuse d'éthanol.

6. Procédé selon la revendication 5, **caractérisé en ce que** la proportion du composant cosolvant vaut de 1,0 à 10,0 % en poids et de préférence de 2 à 5 % en poids, chaque fois par rapport à la quantité de produit de départ utilisée.

7. Procédé selon l'une quelconque des revendications 1 à 6, **caractérisé en ce qu'**on effectue 1 à 4 cycles, les cycles de traitement étant de préférence interrompus par au moins un cycle de détente.

8. Procédé selon l'une quelconque des revendications 1 à 7, **caractérisé en ce que** la durée d'un cycle individuel est de 1 à 2 heures.
